# EUROPEAN PATENT APPLICATION

(11) **EP 1 344 625 A1**
(43) Date of publication of application: **17.09.2003**
(21) Application number: 03004814.4
(22) Date of filing: 04.03.2003
(51) Int. Cl.: B29C 47/00

(54) **Method for manufacturing sheet-like elements made of plastics, particularly nets and the like**

(30) Priority: 11.03.2002 IT MI20020506
(71) Applicant: Tenax S.p.A., 23897 Vigano (Lecco) (IT)
(72) Inventor: Beretta, Mario, 23896 Sirtori (IT)
(74) Representative: Modiano, Guido

(57) **Abstract**

A method for manufacturing sheet-like elements made of plastics, particularly nets and the like, comprising an extrusion process for obtaining an extruded element by extruding mixtures based on fully biodegradable thermoplastic material at a temperature between 70 and 100 °C at the beginning of the extrusion process and between 120 and 140 °C at the end of the extrusion process; maintaining an extrusion pressure between 20 and 50 bar; and performing at least one stretching in a preset direction at a temperature between 35 and 60 °C.

## Description

The present invention relates to a method for manufacturing sheet-like elements made of plastics, particularly nets and the like.

As is known, sheet-like elements made of plastics, particularly nets, are currently obtained by means of an extrusion process and a subsequent stretching step, both performed at relatively high temperatures.

These operating conditions cause considerable difficulty in the correct production of the plastic product and rapidly damage the equipment used.

Conventionally, the manufacture of nets and/or grids made of plastics by extrusion is divided into four steps, i.e., the extrusion of the plastic material, the molding of the extruded part, longitudinal and optionally also transverse stretching, and any further additional processes.

In the extrusion step, the plastic material, in solid granular form, is heated and drawn through an extrusion nozzle until it plasticizes. Plasticizing occurs due to the temperature increase inside the nozzle, which can reach approximately 200 °C at the outlet end due to the effect of friction along the nozzle itself.

The melted polymeric fluid that exits from the extruder is shaped into a net having the intended configurations, according to the various known manufacturing methods, with temperatures that can reach 240 °C for polyolefins, passing the plasticized product through dies which are kept for example in relative motion.

The product is then stabilized by cooling it in water at temperatures that can vary between 35 and 50 °C and by then passing it over a mandrel that has a circular cross-section; the extruded product in tubular form is cut continuously along a generatrix and is opened in the form of a perforated flat sheet.

At the end of the extrusion process described above, the sheet-like element in the form of a net or the like can be subjected to longitudinal stretching and optionally also to transverse stretching.

The longitudinal stretching process normally occurs in air, at a temperature between 120 and 140 °C, or in water, at a temperature between 80 and 100 °C.

Stretching at the temperatures indicated above is achieved by passing the sheet-like element over rollers that rotate at different speeds.

Any further transverse stretching is performed with a subsequent step of heating to a temperature that varies between 120 and 140 °C.

At the end of the extrusion and stretching process it is possible to perform further additional processes, such as for example coupling to other sheet-like elements, cutting, and so forth.

In all of the steps described above it is therefore necessary to maintain high temperatures, and it is also necessary to maintain very high pressures so that the product is extruded and stretched. Currently, the pressure values that are used are on average between 50 and 150 bar.

The mixtures normally used to manufacture nets do not allow to reduce the temperature or pressure, and therefore there are high energy costs and higher costs for the construction and operation of the facilities, which must withstand very high pressures and accordingly require the adoption of suitable solutions: likewise, the maintenance costs for proper operation and protection of such facilities are high.

One of the negative effects of the use of high pressures is also the higher evaporation of process water, which in view of the materials used causes a reduction in pH, with a consequent higher acidity of the vapors released and with a further acceleration of the process of degeneration and wear of the equipment.

Likewise, the manufacturing times are increased in order to be able to reach the high temperatures required to start the machines.

Moreover, the high pressures involved entail a suitable sizing of the equipment, with high energy costs in order to maintain the constant flow of the melted polymer.

In these extreme conditions, the product can undergo, during the processing steps, an alteration process that degrades its characteristics and properties.

The products subjected to these treatments generally undergo degradation and surface damage due to the effect of thermal shocks and due to the different gradient of heating of the layers of material.

The high temperatures involved also make it impossible to use certain organic pigments, which do not tolerate high temperatures, and this inevitably entails a cost increase.

Finally, it is also noted that the production process in which one works at high temperatures and pressures certainly entails higher risks both for the equipment and for the operators; moreover, the high temperatures, if not controlled adequately, can cause the accelerated degradation of polymeric/chemical material, forming fumes that can entail health drawbacks.

The aim of the invention is indeed to solve the problem described above, by providing a method for manufacturing sheet-like elements made of plastics, particularly nets and the like, in which it is possible to operate at considerably lower temperatures and at distinctly lower pressures than normally used in the known art.

Within this aim, an object of the invention is to achieve a high saving in energy costs and in equipment costs, which for lower pressures can be sharply lower than those of known devices.

Another object of the invention is to reduce the evaporation of process water and to reduce production times, as a corollary, and not only, of the fact that it is not necessary to reach high pressures.

Another object of the invention is to provide a method in which it is possible to use a polymeric material that does not undergo a process of degradation and damage due to thermal shocks and due to the different heating gradient of the layers of material.

This aim and these and other objects that will become better apparent hereinafter are achieved by a method for manufacturing sheet-like elements made of plastics, particularly nets and the like, characterized in that it comprises an extrusion process for obtaining an extruded element by extruding mixtures based on fully biodegradable thermoplastic material at a temperature between 70 and 100 °C at the beginning of the extrusion process and between 120 and 140 °C at the end of the extrusion process; maintaining an extrusion pressure between 20 and 50 bar; and performing at least one stretching in a preset direction at a temperature between 35 and 60 °C.

Further characteristics and advantages will become better apparent from the description of a preferred method for manufacturing sheet-like elements made of plastic, particularly nets and the like, which is based on the use of mixtures based on fully biodegradable natural and synthetic thermoplastic material.

Experimental tests that have been conducted have shown that plastics known commercially by the trademark Mater BI, series NF and SG, are ideal for the management of the method.

By using these materials, it is possible to modify the production parameters considerably, since the temperature at the beginning of the extrusion process can be kept between 70 and 100 °C and the temperature at the end of the extrusion process is usually expected to be between 120 and 140 °C.

Management of the method at the temperatures indicated above allows to apply to the plastic material a reduced degree of thermal stress, at the same time achieving a significant improvement of the mechanical characteristics.

Likewise, the operating pressures, usually between 20 and 50 bar, are greatly reduced, thus achieving a saving in the power required to rotate the dies and a reduced wear of the plastic material.

At the outlet of the extruder, the product is subjected at least to a longitudinal stretching step performed in air at a temperature between 35 and 60 °C.

It is then also possible to subject the product to subsequent transverse stretching at a temperature between 35 and 60 °C in air.

The tests conducted have shown that a fully biodegradable thermoplastic material of the synthetic type, i.e., based on polyester, has better mechanical characteristics and allows to manufacture nets even with very fine filaments, while a fully biodegradable plastic material of vegetal origin, for example based on corn starch, allows to use very low operating pressures, since said material has a higher melt index, but it is preferable to obtain filaments having a certain consistency.

The resulting products, being made with mixtures based on fully biodegradable natural or synthetic thermoplastic material, have biodegradability characteristics, and therefore the resulting product is exposed to the biodegradation action of bacteria and parasites; accordingly, if one wishes to ensure durability in the product it is necessary to add an additive in order to achieve nonbiodegradability.

It should be added to the above that the reduced temperatures involved allow to use organic pigments, which hitherto could not be used, because they are not damaged by the temperature.

It is therefore evident from the above description that the invention achieves the intended aim and objects, and in particular the fact is stressed that a method for manufacturing sheet-like elements made of plastic material, particularly nets and the like, is provided which allows to modify radically the techniques currently used, simplifying the steps of production and drastically reducing energy consumption.

The invention thus conceived is susceptible of numerous modifications and variations, all of which are within the scope of the appended claims.

All the details may further be replaced with other technically equivalent elements.

The disclosures in Italian Patent Application No. MI2002A000506 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing sheet-like elements made of plastics, particularly nets and the like, **characterized in that** it comprises an extrusion process for obtaining an extruded element by extruding mixtures based on fully biodegradable thermoplastic material, at a temperature between 70 and 100 °C at the beginning of the extrusion process and between 120 and 140 °C at the end of the extrusion process, and maintaining an extrusion pressure between 20 and 50 bar.

2. The method according to claim 1, **characterized in that** it comprises the step of performing at least one stretching of the element in a preset direction, at a temperature comprised between 35 and 60 °C.

3. The method according to claim 1, **characterized in that** said fully biodegradable thermoplastic material has a synthetic base.

4. The method according to claim 3, **characterized in that** said fully biodegradable thermoplastic material has a synthetic base based on polyester.

5. The method according to claim 1, **characterized in that** said fully biodegradable thermoplastic material has a vegetal base.

6. The method according to claim 5, **characterized in that** said vegetal base is constituted by corn starch.

7. The method according to claim 2, **characterized in that** said at least one stretching is performed in a longitudinal direction of the extruded element.

8. The method according to claim 7, **characterized in that** said at least one stretching is performed at a temperature between 35 and 60 °C, in air.

9. The method according to claim 2, **characterized in that** it comprises an additional step of stretching in a direction that is different from said preset direction of said at least one stretching, said additional stretching step being performed at a temperature between 35 and 60 °C.

10. The method according to claim 1, **characterized in that** it further comprises the addition of an additive adapted to provide to the element nonbiodegradability.
